# EUROPÄISCHE PATENTSCHRIFT

(11) **EP 0 613 146 B1**
(45) Veröffentlichungstag und Bekanntmachung des Hinweises auf die Patenterteilung: **17.06.1998**
(21) Anmeldenummer: 94102494.5
(22) Anmeldetag: 18.02.1994
(51) Int. Cl.: G11B 33/00

(54) **Abdeckvorrichtung zum Sperren des Zugriffs zu Speicherlaufwerken einer Datenverarbeitungseinheit**
Cover device for blocking the access to storage drives of a data processing unit
Dispositif de fermeture pour bloquer l'accès à un dispositif de stockage de données d'une unité de traitement de données

(30) Priorität: 26.02.1993 DE 9302847 U
(43) Veröffentlichungstag der Anmeldung: 31.08.1994
(73) Patentinhaber: Siemens Nixdorf Informationssysteme Aktiengesellschaft, 33102 Paderborn (DE)
(72) Erfinder: Weishaupt, Werner, Dipl.-Ing. (FH), D-86497 Horgau (DE); Neukam, Wilhelm, Dipl.-Ing., D-86159 Augsburg (DE)
(74) Vertreter: Fuchs, Franz-Josef, Dr.-Ing.

(56) Entgegenhaltungen:
- DE-A- 3 702 821
- DE-U- 9 102 939
- DE-U- 9 115 781
- US-A- 4 809 867

## Beschreibung

Abdeckvorrichtung zum Sperren des Zugriffs zu Speicherlaufwerken einer Datenverarbeitungseinheit.

Die Erfindung betrifft eine Abdeckvorrichtung gemäß den Merkmalen des Oberbegriffs des Anspruchs 1.

Beim Einsatz von Datenverarbeitungseinheiten, beispielsweise Personal Computern, besteht die Möglichkeit, die Verarbeitungseinheit durch Befehle über einen längeren Zeitraum hinweg, gegebenenfalls auch unbedient arbeiten zu lassen. Eine derartige Betriebsart kann auftreten bei einer Stapelverarbeitung, beim Ausdrucken von Daten, bei Datensicherungsläufen zum Übertragen von in einem Speichermedium gespeicherten Daten auf ein anderes Speichermedium oder bei der Zusammenarbeit in lokalen Netzen oder mit Großrechnern.

Bei einer derartigen Betriebsart kann nicht ausgeschlossen werden, daß eine Bedienperson zwischenzeitlich die Verarbeitungseinheit verläßt und sich anderen Arbeiten zuwendet. Außerdem ist auch bei einem normalen Betrieb mit Arbeitspausen oder Arbeitsunterbrechnungen zu rechnen, in denen die Verarbeitungseinheit unbeaufsichtigt bleibt.

Wenn bei den obengenannten Betriebsarten die Verarbeitungseinheit unbeaufsichtigt bleibt, besteht die Gefahr, daß aus den Speicherlaufwerken die tragbaren Datenträger in unerlaubter Weise entnommen werden können.

Es ist daher bereits eine Vorrichtung zum Sperren des Zugriffs zu einer Datenverarbeitungseinheit bekannt, bei der eine verschiebbare Klappe vor den Öffnungen der Speicherlaufwerke anbringbar und mittels einer Schließeinrichtung abschließbar ist (DE 37 02 821C2). Bei dieser bekannten Abdeckung befindet sich die verschiebbare Klappe hinter einem Ausschnitt in der Gehäusefrontplatte, wo sie durch seitliche, an der Innenseite der Frontplatte vorhandene Halteelemente geführt ist. Eine weitere Abdeckvorrichtung ist aus dem deutschen Gebrauchsmuster DE 91 02 939 bekannt. Diese bekannte Vorrichtung besteht aus einer die Frontplatte der Datenverarbeitungseinheit an parallel zur Verschieberichtung verlaufenden Kanten U-förmig umgreifendenden Schieberblende, deren freie U-Schenkel die Frontplatte hintergreifen.

Es sind nun bereits Gerate bekannt, bei denen zwei oder mehr Speicherlaufwerke nicht nur untereinander, sondern in Zweierreihe nebeneinander angeordnet sind. Eine Schieberblende bekannter Art mit einer der Breite eines Speicherlaufwerks entsprechenden Abmessung reicht deshalb nicht aus, andererseits ist für eine entsprechend breite Schieberblende seitlich neben den Speicherlaufwerken, d.h. bei geöffnetem Zustand der Schieberblende, nicht genügend Platz, wenn man nicht zulassen will, daß die geöffnete Schieberblende über die seitliche Gerätebegrenzung hinausgeschoben wird.

Der vorliegenden Erfindung liegt deshalb die Aufgabe zugrunde, eine Abdeckvorrichtung der eingangs genannten Art in der Weise zu verbessern, daß auch für Geräte mit zwei nebeneinander angeordneten Speicherlaufwerken eine raumsparende und dennoch ausreichende Abdeckung gewährleistet ist.

Die Lösung dieser Aufgabe ergibt sich erfindungsgemäß durch die kennzeichnenden Merkmale des Anspruchs 1.

Vorteilhafte Weiterbildungen der Erfindung sind in den Unteransprüchen angegeben. Ein Ausführungsbeispiel der Erfindung wird im folgenden anhand der Zeichnung näher erläutert. Dabei zeigen
Figur 1 den frontseitigen Bereich eines Tischrechners gemäß der Erfindung in einer Explosionsdarstellung, von rückwärts betrachtet,
Figur 2 die Anordnung nach Figur 1 in montiertem Zustand bei geschlossener Schieberstellung.

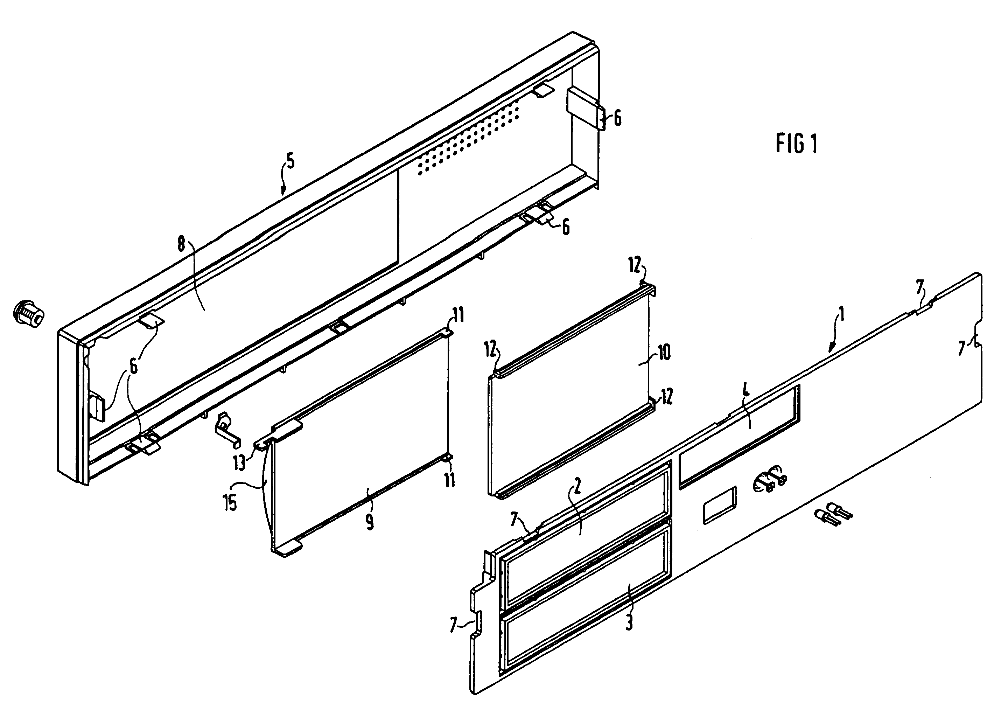

Die Figur 1 zeigt die Rückansicht der Frontplatte 1 eines Tischrechners, bei dem mehrere Speicherlaufwerke für tragbare Datenträger vorgesehen sind. Die Frontplatte 1 weist aus diesem Grund drei rechteckförmige Einbauplätze 2,3,4 auf, wobei unterhalb des ersten Einbauplatzes 2 der zweite Einbauplatz 3 und daneben der dritte Einbauplatz 4 angeordnet ist. Die Figur 1 zeigt ferner eine haubenartige Frontblende 5, die auf die Frontplatte 1 aufgesetzt und mittels federnder Rastzungen 6 befestigt wird, wobei die Rastzungen 6 in zugehörige Rastkerben 7 in der Frontplatte 1 einschnappen. Im Bereich der Einbauplätze 2,3,4 ist in der Frontblende 5 eine fensterartige Aussparung 8 vorgesehen, so daß die tragbaren Datenträger ohne weiteres in die Speicherlaufwerke eingeschoben und wieder entnommen werden können. Zwischen der Frontblende 5 und der Frontplatte 1 befindet sich eine Schieberblende, die bei geschlossenem Zustand den unerwünschten Zugriff zu den Speicherlaufwerken bzw. zu den dort befindlichen Datenträgern verhindert. Wegen der Breite der abzudeckenden Fläche besteht die Schieberblende aus zwei Wandelementen 9,10, die nach Art einer Kulisse ineinanderschiebbar sind, wobei sie dann in dem neben der Aussparung 8 verbleibenden, vergleichsweise kleineren Bereich hinter der Frontblende 5 untergebracht werden können. Die in der Figur 1 in geschlossenem, d.h., ausgefahrenem Zustand dargestellten Wandelemente 9, 10 weisen jeweils ineinandergreifende Führungselemente auf, so daß die beiden Wandelemente 9,10 schienenartig zueinander bewegbar sind. Das äußere Wandelement 9 weist jeweils an den Enden von Ober- und Unterkante je einen Mitnehmerhaken 11 auf, der auf das innere Wandelement 10 übergreift und dort mit querstehenden Anschlagelementen 12 so zusammenwirkt, daß das innere Wandelement 10 vom äußeren Wandelement 9 mitgezogen bzw. zurückgeschoben wird. Das äußere Wandelement 9 weist ferner einen Sperrhaken 13 auf, der bei geschlossener Schieberblende in ein Sperrelement 14 eines an der Frontblende befestigten Sperrhebelschlosses eingreift. Schließlich weist das äußere Wandelement 9 längs seiner freien Vertikalkante ein Griffelement auf, das beispielsweise in Form einer abgerundeten Griffleiste 15 ausgebildet ist.

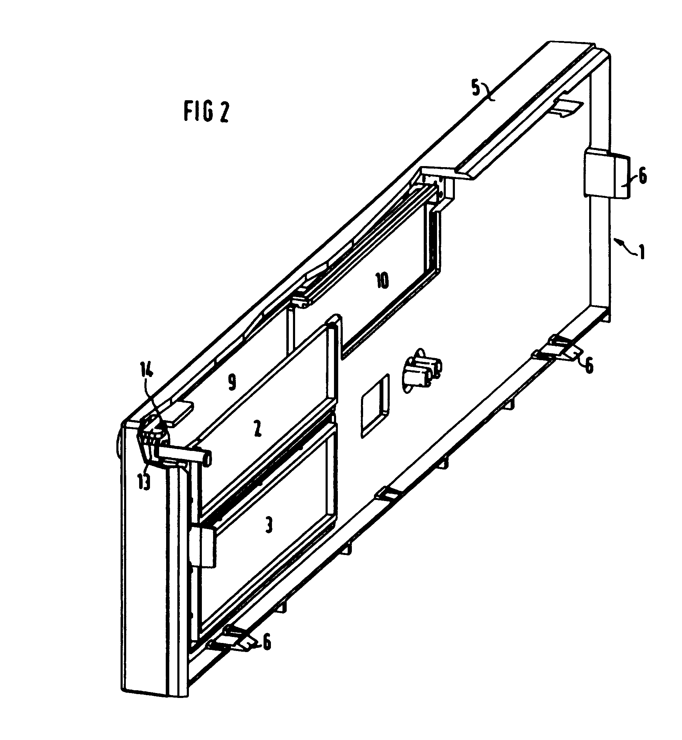

Die Figur 2 zeigt die in Figur 1 dargestellten Einzelteile in montiertem Zustand und bei geschlossener Schieberblende. Die beiden Wandelemente 9,10 der Schieberblende decken damit die rechteckförmige Aussparung 8 in der Frontblende 5 vollständig ab, so daß der Zugriff zu den dahinterliegenden Speicherlaufwerken (siehe die zugehörigen Einbauplatze 2,3,4) verhindert wird.

## Patentansprüche

1. Abdeckvorrichtung zum Sperren des Zugriffs zu Speicherlaufwerken mit tragbaren, über die Frontplatte (1) der zugehörigen Datenverarbeitungseinheit zuführbaren bzw. entnehmbaren Datentragern, unter Verwendung einer die Einstecköffnung für die Speicherlaufwerke abdeckenden, horizontal bewegbaren Schieberblende, die in geschlossenem Zustand mittels eines schlüsselbetätigbaren Schwenkhebelschlosses (13, 14) verriegelbar ist,
**dadurch gekennzeichnet**, daß die Schieberblende aus wenigstens zwei nach Art einer Kulisse ineinander verschiebbaren Wandelementen (9,10) besteht.

2. Abdeckvorrichtung nach Anspruch 1,
**dadurch gekennzeichnet**, daß die Wandelemente (9,10) jeweils ineinandergreifende schienenartige Führungselemente aufweisen.

3. Abdeckvorrichtung nach Anspruch 1 oder 2,
**dadurch gekennzeichnet**, daß an der Ober- und/oder Unterkante der Wandelemente (9,10) ineinandergreifende Anschlagelemente (12) bzw. Mitnehmerhaken (11) vorgesehen sind.

4. Abdeckvorrichtung nach einem der vorhergehenden Ansprüche,
**dadurch gekennzeichnet**, daß die Schieberblende hinter einer die Frontplatte (1) der Datenverarbeitungseinheit mit Ausnahme der Einstecköffnungen für die Speicherlaufwerke abdeckenden Frontblende (5) angeordnet ist.

5. Abdeckvorrichtung nach einem der vorhergehenden Ansprüche,
**dadurch gekennzeichnet**, daß an dem äußeren Wandelement (9) ein Griffelement vorgesehen ist.

6. Abdeckvorrichtung nach Anspruch 5,
**dadurch gekennzeichnet**, daß das Griffelement als senkrecht zur Ebene des Wandelements (9) verlaufende Griffleiste (15) ausgebildet ist.

7. Abdeckvorrichtung nach einem der vorhergehenden Ansprüche,
**dadurch gekennzeichnet**, daß das äußere Wandelement (9) einen nach innen gerichteten Sperrhaken (13) aufweist, der bei geschlossener Schieberblende in ein Sperrelement (14) des Sperrhebelschlosses eingreift.

## Claims

1. Cover device for blocking access to storage drives having portable data carriers which can be supplied or removed via the front panel (1) of the associated data processing unit, by making use of a sliding cover which covers the insertion opening for the storage drives, can be moved horizontally and can be locked in the closed state by means of a key-operated catch lever lock (13, 14), characterized in that the sliding cover comprises at least two wall elements (9, 10) which can be slid into one another in the manner of a slotted link.

2. Cover device according to Claim 1, characterized in that the wall elements (9, 10) in each case have interengaging rail-like guide elements.

3. Cover device according to Claim 1 or 2, characterized in that interengaging stop elements (12) or driver hooks (11) are provided on the upper and/or lower edge of the wall elements (9,10).

4. Cover device according to one of the preceding claims, characterized in that the sliding cover is arranged behind a front cover (5) covering the front panel (1) of the data processing unit with the exception of the insertion openings for the storage drives.

5. Cover device according to one of the preceding claims, characterized in that a gripping element is provided on the outer wall element (9).

6. Cover device according to Claim 5, characterized in that the gripping element is constructed as a gripping strip (12) extending perpendicular to the plane of the wall element (9).

7. Cover device according to one of the preceding claims, characterized in that the outer wall element (9) has an inwardly directed locking hook (13) which engages in a locking element (14) of the catch lever lock when the sliding cover is closed.

## Revendications

1. Dispositif de fermeture pour bloquer l'accès à un dispositif de stockage de données comprenant des supports de données portables susceptibles d'être insérés ou retirés par la plaque frontale (1) de l'unité de traitement de données associée, en utilisant un cache à coulisse mobile en sens horizontal recouvrant l'ouverture d'insertion destiné au dispositif de stockage de données, qui, en position fermée, peut être verrouillé au moyen d'une serrure à levier pivotant (13, 14) actionnable à clé, caractérisé en ce que le cache à coulisse comporte au moins deux panneaux (9, 10) susceptibles de glisser l'un dans l'autre à la manière d'une coulisse.

2. Dispositif de fermeture selon la revendication 1, caractérisé en ce que les panneaux (9, 10) comportent chacun des éléments de guidage en forme de rail s'engrenant l'un dans l'autre.

3. Dispositif de fermeture selon la revendication 1 ou 2, caractérisé en ce que le bord supérieur et/ou inférieur des panneaux (9, 10) comporte des éléments de butée (12) ou des crochets d'entraînement (11) s'engrenant l'un dans l'autre.

4. Dispositif de fermeture selon l'une quelconque des revendications précédentes, caractérisé en ce que le cache à coulisse est disposé derrière un cache frontal (5) recouvrant la plaque frontale (1) de l'unité de traitement de données, à l'exception des ouvertures d'insertion destinées aux dispositifs de stockage de données.

5. Dispositif de fermeture selon l'une quelconque des revendications précédentes, caractérisé en ce qu'un élément de préhension est prévu sur le panneau extérieur (9).

6. Dispositif de fermeture selon la revendication 5, caractérisé en ce que l'élément de préhension est réalisé sous forme de tige de préhension (15) s'étendant verticalement par rapport au plan du panneau (9).

7. Dispositif de fermeture selon l'une quelconque des revendications précédentes, caractérisé en ce que le panneau extérieur (9) comporte un crochet d'arrêt (13) orienté vers l'intérieur, qui, en position fermée du cache à coulisse, s'engrène dans un élément d'arrêt (14) de la serrure à levier d'arrêt.
